# EUROPEAN PATENT APPLICATION

(11) **EP 1 956 853 A1**
(43) Date of publication of application: **13.08.2008**
(21) Application number: 07101993.9
(22) Date of filing: 08.02.2007
(51) Int. Cl.: H04Q 7/30

(54) **Mobile telephone networks**

(71) Applicant: Nederlandse Organisatie voor Toegepast-Natuurwetenschappelijk Onderzoek TNO, 2628 VK Delft (NL)
(72) Inventor: de Nijs, Johannes Marinus Maria, 2281 SV Rijswijk (NL)
(74) Representative: van Loon, C.J.J.

(57) **Abstract**

A method of transmitting mobile signals through an existing cable network comprises the steps of:
• transmitting the mobile signals between an antenna unit (3) and a mobile unit (4) via a wireless link at a first frequency, and
• transmitting the mobile signals between the antenna units (3) and a mobile switching centre (8) via the cable network (2) at a second frequency.
The first frequency is substantially identical to the second frequency, so that the wireless link uses the same frequency as the cable network to transmit mobile signals. The cable network (2) may be a CATV network and has an unextended frequency range of, for example, 0-800 MHz. Accordingly, the wireless frequency is chosen so as to match an available frequency band of the cable network.

## Description

The present invention relates to mobile telephone networks. More in particular, the present invention relates to a method of transmitting mobile signals through an existing cable network, such as a CATV network.

Systems for mobile communications, also known as mobile or cellular communication systems, generally consist of two parts: wireless links between mobile handsets and antenna units, and wired (that is, fixed) links between the antenna units and other parts of the system, such as base stations, so-called mobile switching centres, and interfaces to other communication systems. Typically, dedicated fixed networks are laid out to transmit signals between the various parts of the system.

It has been proposed to use other networks, such as cable television (CATV) networks, for transmitting mobile communication signals, thus avoiding the expense of laying out two or more networks covering the same area. Cable television networks consist of coaxial cables and/or fibre optic cables, and typically offer a wide bandwidth, for example from 0 to approximately 870 MHz (megahertz). In most cable television systems, this wide bandwidth is divided into a plurality of channels, each channel having a predetermined bandwidth. Some of these channels may be unused and available for other purposes. This creates the opportunity to use the cable television network for transmitting signals of a mobile communication system, so-called mobile signals.

However, the wireless links used in mobile systems operate at other frequencies than are available in cable networks. The well-known GSM system, for example, uses carrier frequencies of 900 and 1900 MHz, whereas existing cable networks have a maximum frequency of less than 900 MHz, often less than 800 MHz. In order to solve this frequency mismatch problem, prior proposals required significant modifications to the cable network. Such modifications are typically expensive as they may involve additional apparatus in many places in the network.

Frequency converters may be used to provide frequency conversions of the wireless signals, so as to adapt the high frequency wireless signal to the lower frequency bands of the network. Such frequency conversions require relatively expensive apparatus which may introduce distortion and noise into the system. Other proposals require the addition of large numbers of amplifiers in the network, some of which must be installed underground.

United States Patent US 5 953 670 (Newson / Northern Telecom) discloses a cable television network in which frequency conversions are carried out between a wireless (mobile) transmission frequency and the transmission frequency of the cable network. A head-end signal processor arranged at the head-end of the cable network is provided for this purpose. In this Prior Art system, the (carrier) frequency at which the cable network transmits the mobile signals is therefore different from the (carrier) frequency of the wireless link, and additional apparatus is provided to achieve this difference.

United States Patent US 6 721 298 (Vella-Coleiro / Lucent) discloses a cable network used for both television and a wireless personal communication service (PCS). A head-end frequency converter unit carries out a frequency conversion of a transmit signal from a 1930-1990 MHz PCS band to a 450-750 MHz cable band. The frequency converter unit adds to the cost and complexity of the network, and will also introduce noise.

International Patent Application WO 98/09439 (Evanyk / Ericsson) discloses a cable network used for transport of mobile signals in which interface units are used to insert the PCS transmissions into two channels of approximately 350 and 550 MHz, as illustrated in Fig. 2 of WO 98/09439. Accordingly, a frequency conversion must necessarily take place at either the interface units or the base stations. In this Prior Art proposal, the cable network essentially replaces the so-called T1 network and establishes communications, via the interface units, between the base stations and the mobile switching centre (MSC).

United States Patent Application US 2004/166833 (Shklarsky) discloses a cable network in which mobile signals are passed without modification, that is, without frequency conversion. This is accomplished by extending the bandwidth of the cable networks, adding filters and amplifiers for amplifying the high-frequency signal components. In this way, the frequency range of the cable network is extended from 0-750 MHz to 0-2000 MHz (2 GHz). This known cable network is capable of passing the mobile signals without frequency conversion, but requires extensive modifications to make the required bandwidth extension possible. As the attenuation of a cable network increases with frequency, large numbers of additional amplifiers are necessary in this Prior Art solution.

It is an object of the present invention to overcome these and other problems of the Prior Art and to provide a method of transmitting mobile signals through an existing cable network requiring neither frequency conversions nor extensive hardware modifications of the cable network, such as adding large numbers of amplifiers to the network.

It is another object of the present invention to overcome these and other problems of the Prior Art and to provide a system for transmitting mobile signals through an existing cable network requiring neither frequency conversions nor extensive hardware modifications of the cable network.

Accordingly, the present invention provides a method of transmitting mobile signals through an existing cable network, which method comprises the steps of:
• transmitting the mobile signals between an antenna unit and a mobile unit via a wireless link at a first frequency, and
• transmitting the mobile signals between the antenna units and a mobile switching centre via the cable network at a second frequency,
wherein the first frequency is identical to the second frequency, and wherein the cable network has an unextended frequency range.

By using identical or substantially identical frequencies or frequency bands in both the wireless links and the fixed links, a frequency conversion is no longer necessary. By using a cable network having its original, unextended frequency range, extensive modifications to the cable network are avoided. For the avoidance of doubt it is noted that the unextended frequency range mentioned above refers to the original bandwidth of the cable network as it was designed for transmitting television signals. Such an unextended frequency range typically has an upper boundary of 900 MHz or less, often 870 MHz or even 800 MHz. In the present invention, the wireless mobile signals are therefore transmitted at a frequency smaller than approximately 900 MHz.

In accordance with the present invention, therefore, the wireless mobile signals are transmitted at a frequency which is chosen to match available channels of the cable network. This may involve modifications to the mobile handsets and the antenna units, but such modifications are relatively minor and less complicated than adding a large number of amplifiers to the actual cable network as proposed by Shklarsky in US 2004/166833. In addition, by modifying the carrier frequency (or frequencies) of the wireless links, the existing cable network is not disturbed. Modem mobile handsets are often capable of operating at different frequencies and may therefore require no modification. As the replacement rate of mobile handsets is high, with some consumers buying a new handset every year, the actual cost of modifying or replacing handsets would be relatively low. Antenna units may be tuned to a new frequency, or may easily be replaced with modified units.

Accordingly, the cost of modifying the wireless frequency so as to suit the cable network is much lower than the cost of modifying the cable network so as to accommodate current mobile radio frequencies by extending its bandwidth. As a result, the present invention provides a clear advantage over the Prior Art.

Each of the first and second frequencies may be substituted with a pair of frequencies so as to provide simultaneous bidirectional communication. However, it is also possible to use a single first frequency (and a single second frequency).

The (first or second) frequency at which the mobile signals are transmitted may be chosen so as to best suit the cable network. Advantageously, this frequency lies within the frequency band previously held by analogue (terrestrial) television. In many countries, analogue television is being phased out, in favour of digital television. As a result, the analogue television frequency bands may now be used for other purposes, including the transmission of mobile signals. Accordingly, the present invention advantageously uses a frequency previously held by analogue television channels.

Examples of such frequency ranges are the well-known band III and band IV/V. Band III ranges from 174 to 230 MHz, while band IV/V ranges from 470 to 862. The transmission frequency of the present invention may advantageously lie within these bands.

The cable network may be used for transmitting signals between the base stations and the mobile switching centre, as in the Prior Art mentioned above. However, according to the present invention the cable network may alternatively, or additionally, be used for transmitting mobile signals between the antenna units and the base stations. The antenna units transmit mobile signals to mobile handsets and receive mobile signals from the handsets, while base stations accumulate the mobile signals from one or more antenna units for transmission to the mobile switching centre, and distribute mobile signals received from the mobile switching centre among the antenna units.

Most cable networks extend into neighbourhoods, streets and houses, and thereby provide a unique opportunity to install large numbers of antenna units serving as mobile network access points. By providing a large number of relatively closely spaced antenna units, the cells of the mobile network can be made smaller. Smaller cells make it possible to use less powerful antenna units and to arrange the antennas close to the ground. This, in turn, reduces the co-channel interference which may occur in conventional mobile systems. Accordingly, a further aspect of the present invention provides a method of transmitting mobile signals through an existing cable network, which cable network extends between the antenna units and the base stations. In other words, the cable network is preferably used for the link connecting the base stations and the antenna units, so as to provide a finely meshed mobile access network.

In the present invention, the cable network (or networks) may additionally (or alternatively) be used for connecting the base stations and the mobile switching centre.

The present invention also provides a system for transmitting mobile signals through an existing cable network, which system comprises:
• first transmission units for transmitting the mobile signals between an antenna unit and a mobile unit via a wireless link at a first frequency, and
• second transmission units for transmitting the mobile signals between the antenna units and a mobile switching centre via the cable network at a second frequency,
wherein the first frequency is identical to the second frequency, and wherein the cable network has an unextended frequency range.

The present invention additionally provides a system for mobile communication, which system comprises a system for transmitting mobile signals through an existing cable network as defined above. The present invention further provides mobile signal transmission devices for use in the systems defined above.

The present invention further provides mobile telephone devices suitable and designed for use in the method and systems defined above. The mobile telephone devices may comprise mobile handsets and/or antenna units.

The present invention will further be explained below with reference to exemplary embodiments illustrated in the accompanying drawings, in which:
Fig. 1 schematically shows a mobile communication system according to the present invention.
Fig. 2 schematically shows an antenna unit of the mobile communication system of Fig. 1 in more detail.
Fig. 3 schematically shows an amplifier unit as may be used in the present invention.

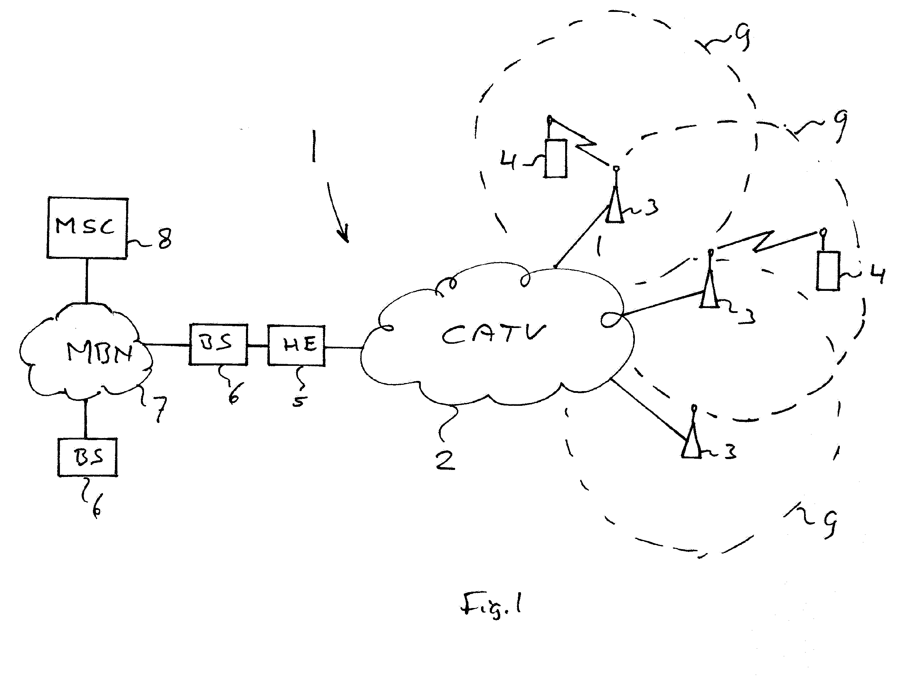

The mobile communication system 1 shown merely by way of non-limiting example in Fig. 1 comprises a cable network 2, antenna units 3, a head-end unit 5, base stations (BS) 6, a mobile backbone network 7, and a mobile switching centre (MSC) 8. The antenna units 3, which each define a cell 9, are capable of communicating with mobile handsets 4 via wireless links. The system 1 may be arranged for GSM, UMTS and/or any other mobile communication standard, provided that certain adjustments are made as will be explained below.

The exemplary cable network 2 of Fig. 1 is shown to be a cable television (CATV) network. The cable network 2 may comprise coaxial cables and/or fibre optic cables. Preferably, the cable network 2 is a hybrid fibre coax (HFC) network which comprises both coaxial and fibre optic cables.

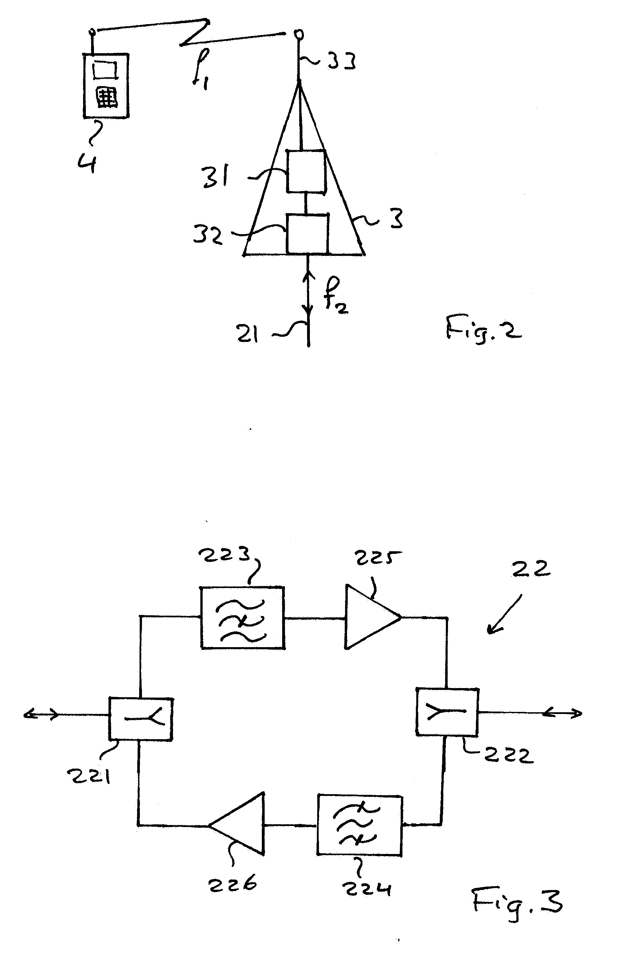

As shown in Fig. 1, the cable network 2 connects antenna units 3 to the base station 6 via a head-end unit 5. These (cable) antenna units 3 may be referred to as cable receiver/transmitter units (CRT units) which are capable of conveying radio frequency (RF) modulated mobile signals received from the cable network 2 to the handsets 4 via wireless links, and of conveying RF modulated mobile signals received from the handsets 4 to the cable network 2. This will later be explained in more detail with reference to Fig. 2. The head-end unit 5, which may be integrated in the base station 6, provides an interface between the cable network 2 and the mobile backbone network 7 and may be capable of converting optical signals into electrical signals and vice versa, if so required.

In accordance with the present invention, the cable network 2 may be a conventional cable network having a frequency range (bandwidth) of, for example, 0-900 MHz. Cable networks are typically arranged for distribution of signals (downstream), for example from a television and radio signal source to a plurality of subscriber units. A frequency range of 85-862 MHz may be used for this purpose. To allow the aggregation (upstream) of signals for Internet and other interactive applications, a frequency range of 0-65 MHz is typically used.

As the conventional cable network 2 is connected to a large number of subscriber units in homes and other buildings, a large number of potential mobile access points are provided. A large number of access points, such as the antenna units 3, make it possible to provide a large number of relatively small cells 9. This, in turn, results in a reduce amount of co-channel interference, in particular when the antennas of the antenna units are placed close to the ground.

In accordance with the present invention, the cable network 2 is utilized for transmitting mobile signals between the antenna units 3 and the base station 6 via the head-end unit 5. As the base station 6 is connected to the mobile backbone network 7 and the mobile switching centre 8, the cable network 2 effectively connects the antenna units 3 to the mobile switching centre 8. Although in the example shown the cable network 2 extends between the antenna units 3 and the base station 6, it may instead extend between the antenna units 3 and the mobile switching centre 8. It is also possible to use a cable network in accordance with the present invention between the mobile switching centre 8 and the base stations 6, although in such embodiments no advantage is gained from the large number of potential access points which a typical cable network offers.

In order to transmit the mobile signals via the cable network 2, the wireless frequencies are chosen so as to match an existing frequency band of the network. In this way, the mobile signals can be transmitted without frequency conversions and without extending the frequency range of the network. Particularly suitable frequency ranges are the ranges presently or previously occupied by analogue television channels. In Europe, these are so-called band III which ranges from 174 to 230 MHz, and so-called band IV/V, which ranges from 470 to 862 MHz. These frequency bands, which become available when an analogue television system is converted into a digital system, are sometimes referred to as "digital dividend".

As former analogue television bands are distribution (downstream) frequency ranges, they are suitable for transmitting signals from the base station to the antenna units. To also provide transmission of signals in the opposite direction (upstream), dedicated frequency bands may be created, as will later be explained in more detail with reference to Fig. 3. Such upstream frequency bands may lie within the same frequency range as the downstream bands, for example band III, but are separated from the downstream signals by suitable filters.

A fundamental aspect of the present invention is illustrated in Fig. 2. An antenna unit 3, which may be a CRT unit referred to above, is shown to comprise a first transmission unit 31 for communicating bidirectionally with a mobile handset 4 via an antenna 33 and a wireless RF link 30. The antenna unit 31 further comprises a second transmission unit 32 for communicating bidirectionally with a cable link 21 which is part of the cable network (2 in Fig. 1). The communication units 31 and 32 are coupled and may be constituted by a single, integral communication unit.

The wireless link 30 has a carrier frequency f₁, so that both the first transmission unit 31 and the mobile handset 4 are arranged for operating at this carrier frequency f₁. The communication over the cable link 21 takes place at a carrier frequency f₂, both the second communication unit 32 and a remote unit (for example the base station 6 in Fig. 1) being capable of operating at the carrier frequency f₂.

Prior Art methods and systems for transmitting mobile signals via cable networks typically involved frequency conversions: the first carrier frequency f₁ would be down-converted to the second carrier frequency f₂ for transmission over the cable network. In contrast, the present invention proposes to make the first carrier frequency f₁ equal to the second carrier frequency f₂. As a result, no frequency conversions are necessary, and any problems (e.g. signal distortions) caused by frequency conversions are avoided.

In addition, the present invention proposes to choose the second carrier frequency f₂, and hence the first carrier frequency f₁, such that this frequency is within the original, unextended frequency range of the cable network. Accordingly, a bandwidth extension of the cable network and the associated cost is unnecessary and may be omitted.

In particular, the present invention proposes in a preferred embodiment to use analogue television channels for accommodating the carrier frequency f₂ (= f₁), in particular analogue terrestrial channels such as band III and/or band IV/V.

In the discussion above a single carrier frequency f₁ is mentioned. The present invention can advantageously be practiced using a single carrier frequency and even bidirectional communication is possible when using time domain multiplexing. However, most embodiments will provide simultaneous bidirectional communication. This can be accomplished by using a pair of carrier frequencies, one (f₁ = f₂) for upstream mobile signals and one (f_{1'} = f_{2'}) for downstream mobile signals. This will further be explained with reference to Fig. 3.

An exemplary embodiment of an amplifier unit suitable for use in the present invention is schematically illustrated in Fig. 3. The amplifier unit 22, which is part of the cable network (2 in Fig. 1), is shown to comprise a first splitter (Y) 221, a second splitter 222, a first (stopband) filter 223, a second (passband) filter 224, a first amplifier 225 and a second amplifier 226. The stopband first filter 223 and the first amplifier 225 constitute a downstream branch of the amplifier unit 22, while the passband filter 224 and the second amplifier 226 together constitute an upstream branch. Both branches are joined at the splitters 221 and 222.

The passband filter 224 is arranged for forming a passband having a predetermined bandwidth and a predetermined centre frequency. The bandwidth is preferably equal to approximately 8 MHz, although other bandwidths, such as 4 MHz and 10 MHz, may also be feasible. The centre frequency is approximately equal to the (first and second) carrier frequencies f₁ and f₂ mentioned above.

The stopband filter 223 is arranged for passing all frequencies except the passband of the passband filter 224. The filters 223 and 224 are therefore complementary and together ensure that the upstream channel is separated from the downstream channel(s). Using the amplifier unit 22, an upstream channel for a bidirectional mobile communication system can be provided in an existing cable network.

As mentioned above, a mobile unit (4 in Figs. 1 & 2) according to the present invention is designed for operating at a(n upstream) frequency f₁ equal to, for example, 200 MHz, or any other suitable frequency within the bandwidth of the cable network. For downstream mobile signals, for example from the base station or mobile switching centre to the mobile handset, another available frequency f_{1'} different from the (upstream) frequency f₁ can be used. As a result, a pair of frequencies (f₁, f_{1'}) is used. An antenna unit (3 in Figs. 1 & 2) according to the present invention is also designed for operating at this pair of frequencies.

A preferred embodiment of the present invention can be summarized as a method of providing communication between an antenna unit and a switching centre in a network for mobile communication, which method comprises the steps of:
• providing a first, wireless link having a first carrier frequency between a mobile unit and the antenna unit,
• providing a second, fixed link having a second carrier frequency between the antenna unit and the base station, and
• providing a third link between the base station and the switching centre,
wherein the second link is part of a cable network, and wherein the first carrier frequency is substantially equal to the second carrier frequency. Each carrier frequency defines a frequency band, and therefore the frequency band of the wireless link is equal to, or at least overlaps, the frequency band of the fixed link.

Each carrier frequency may be substituted with a pair of distinct carrier frequencies, one carrier frequency of the pair being used for upstream mobile signals and the other carrier frequency of the pair being used for downstream mobile signals. Instead of a pair of carrier frequencies, a triplet of distinct frequencies may be used.

Another preferred embodiment of the present invention can be summarized as a system for providing mobile communication, the system comprising:
• at least one antenna unit capable of communicating with a mobile unit via a first, wireless link having a first carrier frequency,
• at least one base station capable of communicating with the at least one antenna unit via a second, fixed link having a second carrier frequency,
• at least one switching centre capable of communicating with the at least one base station via a third link,
wherein the second link is part of a cable network, and wherein the first carrier frequency is substantially equal to the second carrier frequency.

The present invention is based upon the insight that mobile telephone signals may be conveyed by a cable network without frequency conversions or network extension be adapting the mobile transmission frequency so as to match a suitable cable network frequency. The present invention benefits from the further insight that suitable cable network frequencies are frequencies which were previously used for analogue television, such as terrestrial television band III and band IV/V frequencies.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A method of transmitting mobile signals through an existing cable network, which method comprises the steps of:
• transmitting the mobile signals between an antenna unit (3) and a mobile unit (4) via a wireless link at a first frequency (f₁), and
• transmitting the mobile signals between the antenna units (3) and a mobile switching centre (8) via the cable network (2) at a second frequency (f₂),
wherein the first frequency is identical to the second frequency, and wherein the cable network has an unextended frequency range.

2. The method according to claim 1, wherein the frequency corresponds to a frequency previously held by analogue television channels.

3. The method according to claim 1 or 2, wherein the frequency lies within band III and/or band IV/V.

4. The method according to claim 1, 2 or 3, wherein the cable network (2) extends between the antenna units (3) and the base stations (6).

5. A system for transmitting mobile signals through an existing cable network, which system comprises:
• first transmission units (31) for transmitting the mobile signals between an antenna unit (3) and a mobile unit (4) via a wireless link at a first frequency (f₁), and
• second transmission units (32) for transmitting the mobile signals between the antenna units (3) and a mobile switching centre (8) via the cable network (2) at a second frequency (f₂),
wherein the first frequency is identical to the second frequency, and wherein the cable network has an unextended frequency range.

6. The system according to claim 5, wherein the frequency corresponds to a frequency previously held by analogue television channels.

7. The system according to claim 5 or 6, wherein the frequency lies within band III and/or band IV/V.

8. The system according to claim 5,6 or 7, wherein the cable network (2) extends between the antenna units (3) and the base stations (6).

9. A system (1) for mobile communication, comprising a system for transmitting mobile signals through an existing cable network (2) according to any of claims 5-8.

10. A telephone device (4) for use in the method according to any of claims 1-4 or in the system according to any of claims 5-9.
